(19) Europäisches Patentamt
European Patent Office
Office européen des brevets

(11) **EP 2 301 264 B1**

(12) **EUROPÄISCHE PATENTSCHRIFT**

(45) Veröffentlichungstag und Bekanntmachung des Hinweises auf die Patenterteilung:
**21.02.2018 Patentblatt 2018/08**

(51) Int Cl.:
*H04W 4/02* (2018.01)   *H04L 29/08* (2006.01)
*H04W 4/20* (2018.01)

(21) Anmeldenummer: **09772468.6**

(22) Anmeldetag: **01.07.2009**

(86) Internationale Anmeldenummer:
**PCT/EP2009/058242**

(87) Internationale Veröffentlichungsnummer:
**WO 2010/000768 (07.01.2010 Gazette 2010/01)**

(54) **DATENVERARBEITUNGSMODUL IN EINEM FUNKNETZWERK MIT ORTSBEZOGENEN DIENSTEN**

DATA PROCESSING MODULE IN A RADIO NETWORK HAVING LOCATION-SPECIFIC SERVICES

MODULE DE TRAITEMENT DE DONNÉES DANS UN RÉSEAU DE RADIOCOMMUNICATION À SERVICES BASÉS SUR LA LOCALISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **01.07.2008 DE 102008031081**

(43) Veröffentlichungstag der Anmeldung:
**30.03.2011 Patentblatt 2011/13**

(73) Patentinhaber: **Aloqa GmbH**
**80469 München (DE)**

(72) Erfinder:
• **TREU, Georg**
**80469 München (DE)**

• **MARTENS, Johannes**
**81825 München (DE)**

(74) Vertreter: **Maikowski & Ninnemann**
**Patentanwälte Partnerschaft mbB**
**Kurfüstendamm 54-55**
**10707 Berlin (DE)**

(56) Entgegenhaltungen:
WO-A-2004/073233   WO-A-2007/025080
US-A1- 2003 060 214   US-A1- 2006 079 244
US-A1- 2008 119 205

## Beschreibung

Die vorliegende Erfindung bezieht sich auf ein Datenverarbeitungsmodul in einem Funknetzwerk mit ortsbezogenen Diensten, und insbesondere auf ein Modul zur energie-, CPU- und dateneffizienten Bündelung und Übertragung proaktiver Position Update Requests.

## Hintergrund der Erfindung

### Proaktive ortsbezogene Dienste

Ortsbezogene Dienste (Location-based Services, LBSs) stellen ihren Nutzern Informationen in Abhängigkeit des Aufenthaltsortes einer oder mehrerer Zielpersonen bereit. Während dem Nutzer bei reaktiven LBSs ortsbezogene Informationen auf Anfrage ausgeliefert werden, lösen proaktive LBSs beim Eintreten vordefinierter räumlicher Ereignisse, wie etwa dem Annähern einer Zielperson an einen Point of Interest (Pol), automatisch Dienstaktionen aus. Während am Markt bereits vielfältige reaktive LBSs verfügbar sind, werden proaktive LBSs bislang nur vereinzelt und in sehr rudimentärer Form angeboten. Denkbar sind zum Beispiel folgende Dienste:

- Proaktiver Touristenführer: Eine Person wird automatisch mit entsprechenden Hintergrundinformationen versorgt, sobald sie sich einer interessanten Sehenswürdigkeit annähert.
- Child Tracker: Ein Kind ist mit einem mobilen Endgerät ausgestattet, welches dessen Eltern informiert, sobald das Kind eine vorher zu definierende Zone, zum Beispiel den Schulhof, verlässt.
- Buddy Tracker: Zwei mobile Teilnehmer werden, zum Beispiel im Rahmen eines Community-Dienstes, benachrichtigt, sobald sie sich in der Nähe befinden (Proximity Detection).

### Position-Update-Methoden

Zur Realisierung solcher proaktiver LBSs sind die im Folgenden beschriebenen Position-Update-Methoden vorgesehen, mit deren Hilfe sich ein zentralisierter Location Server über die Positionen der Zielpersonen informieren kann.

- Polling: Der Location Server fragt die aktuelle Position des Geräts an. Dies kann durch eine Anfrage seitens der Anwendung an den Server ausgelöst werden, oder auf periodischer Basis bzw. aufgrund spezieller Caching-Strategien vom Server ausgehen.

  - Periodisches Position Update: Das Gerät löst ein Position Update aus, nachdem - bezogen auf das letzte Update - ein vordefinierter Zeitraum, das sogenannte Update-Intervall, verstrichen ist.
  - Distanzbasiertes Position Update. Das mobile Endgerät sendet ein Position Update, sobald die Distanz zwischen der zuletzt übermittelten und der aktuellen Position einen vordefinierten Schwellwert übersteigt, welcher im Folgenden als Update-Distanz bezeichnet wird.

- Wegstreckenbasiertes Position Update. Dieser ist eine Variation des distanzbasierten Position Updates, wobei das mobile Endgerät einen Position Update sendet, sobald die Wegstrecke zwischen der zuletzt übermittelten und der aktuellen Position einen vordefinierten Schwellwert übersteigt, welcher im Folgenden als Update-Wegstrecke bezeichnet wird. Im Gegensatz zum distanzbasierten Position Update wird hier also keine Luftlinien-Distanz vorgegeben, sondern eine Wegstrecke, die aus einem topologischen Modells, wie etwa einer Straßenführung oder der Topologie des Inneren eines Gebäudes, ergibt. Für zwei beliebige Positionen $a$ und $b$ gilt immer, dass Distanz $(a, b)$ <= Wegstrecke $(a, b)$.

- Zonenbasiertes Position Update: Ein Position Update wird beim Betreten oder Verlassen einer vorgegebenen geographischen Zone ausgelöst, welche zum Beispiel als Kreis mit eindeutig definiertem Mittelpunkt und Radius oder als Polygon definiert sein kann. Im Folgenden wird eine solche Zone als Update Zone bezeichnet.

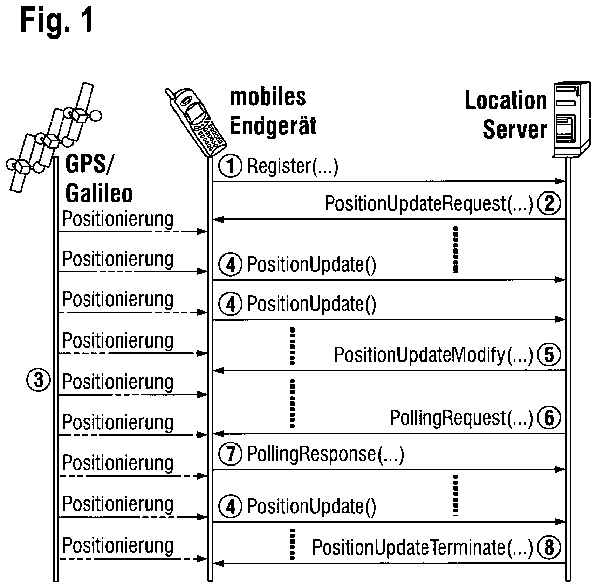

Um die auf der Luftschnittstelle begrenzte Bandbreite zu schonen sowie den Energieverbrauch mobiler Endgeräte zu reduzieren, sollte das durch diese Methoden erzeugte Nachrichtenaufkommen möglichst gering gehalten werden. Gleichzeitig sollten die jeweiligen Anwendungsanforderungen bezüglich Verfügbarkeit und Aktualität der ermittelten Positionen erfüllt werden. Die verschiedenen Methoden können dynamisch konfiguriert und entsprechend dieser Anforderungen angewendet werden. Figur 1 zeigt den typischen Verlauf eines Nachrichtenaustausches, wie er zwischen dem Location Server und dem mobilen Endgerät der Zielperson im Rahmen einer solchen Positionierungssitzung stattfinden kann.

Nach der Registrierung für die Sitzung (1) übermittelt der Location Server dem mobilen Endgerät einen so genannten Position Update Request (2), welcher die Konfiguration trägt, anhand derer Position Updates ausgelöst werden sollen. Dies entspricht also der Auswahl einer oder mehrerer der genannten Update-Methoden sowie der Definition entsprechender Parameter, also zum Beispiel distanzbasierte Updates parametrisiert durch die Update-Distanz. Das Gerät aktiviert dann, falls noch nicht geschehen, eines der auf dem Endgerät verfügbaren Verfahren zur Positionsbestimmung, zum Beispiel GPS, von dem es ab nun kontinuierlich Positionsinformationen erhält (3). Die so ermittelten Positionen werden stetig mit der empfangenen Update-Konfiguration verglichen. Im Falle einer Übereinstimmung sendet das Gerät ein Position Update an den Server (4). Unter anderem enthält diese Nachricht die aktuelle Position des Zielobjekts sowie einen Zeitstempel. Diese Werte werden dann vom Location Server verarbeitet; beispielsweise werden sie mit den Positionen anderer Zielpersonen verglichen oder an einen Anwendungsserver weitergeleitet. Eine Update-Konfiguration bleibt so lange gültig, bis sie vom Location Server aktualisiert (5) oder explizit beendet (8) wird. Zusätzlich kann der Location Server unabhängig von der ausgeführten Update-Methode gezielt Positionen nachfragen, indem er einen so genannten Polling Request an das Gerät absetzt (6). Dieser wird mittels einer Polling Response, welche wiederum die aktuell gemessene Position trägt, vom Gerät beantwortet (7).

Die Anwendung von Position-Update-Methoden und deren dynamischer Konfiguration sind bekannt.

Die US 2003/060214 beschreibt ein System, in dem Position Update Requests von einem Location Server über einen Positionierungs-Proxy an ein Positionierungssystem (z.B. ein GMLC) gerichtet werden. Ähnliche Systeme sind auch aus WO 2007/025080, US 2008/119205, WO 2004/073233 und US 2006/079244 bekannt.

Nachteile des Standes der Technik

Bei der Anwendung von bekannten Position-Update-Methoden ergeben sich die folgenden Probleme:

- Vielzahl paralleler Position Update Requests: Die Position-Update-Methoden werden in der Regel von einer Vielzahl von LBS-Anwendungen parallel genutzt. Soll z.B. eine Zielperson im Rahmen eines Tourismus-Dienstes auf eine Vielzahl von Zonen bei Betreten proaktiv hingewiesen werden, so wird auch eine entsprechende Vielzahl zonenbasierter Position Update Requests an das Endgerät gesendet und dort parallel ausgewertet. Verfolgt z.B. eine weitere LBS-Anwendung die gleiche Zielperson mit distanzbasierten Updates, so ergibt sich ein weiterer (distanzbasierter) Position Update Request. Wird die Zielperson dann auch noch im Rahmen des Buddy Trackers hinsichtlich Proximity Detection überwacht, so wird noch mindestens ein weiterer Position Update Request parallel ausgewertet. Durch diese Vielzahl paralleler Position Update Requests ergibt sich in der Summe eine hohe Zahl von Nachrichten (die unterschiedlichen Requests (2) führen schließlich unabhängig voneinander jeweils wiederum zu Position Updates (4) sowie Aktualisierungen (5) und eventuell auch Polling Requests (6) und Polling Responses (7)). Dies wiederum resultiert in einer hohen Belastung a) der CPU-Ressourcen des mobilen Endgeräts, b) der Energiereserven des mobilen Endgeräts, sowie c) der knappen Luftschnittstelle, über die die Daten übertragen werden.

- Zu hohes Datenaufkommen: Durch Ihre Generalität (periodisch, distanzbasiert, zonenbasiert, jeweils mit unterschiedlichen Parametern konfigurierbar) sind Position Update Requests nicht unbedingt gut zu komprimieren. Ein zonenbasierter Request, der ein Polygon spezifiziert, trägt beispielsweise alle Ecken des Polygons in sich, wovon jede aus mindestens zwei numerischen Werten besteht, die jeweils ca. 8 bytes zur Codierung benötigen können. Während im Festnetz solche Datenmengen natürlich kein Problem sind, können sie für mobile LBS-Anwendungen hingegen zum Hinderungsgrund werden, z.B. dann, wenn eine mobile Daten-Flatrate, die pro Abrechnungszeitraum nur wenige Megabytes zulässt, auf keinen Fall überschritten werden darf und gleichzeitig ein ständiges Tracking der Zielperson gewährleistet sein soll.

- Dynamische Indizierung: Ein weiteres Problem ist die dynamische Indizierung der Positionen der Zielpersonen. Diese ist z.B. bei so genannten Range Queries (Bereichsanfragen) notwendig, wenn der Location Server z.B. auf Anfrage der LBS-Anwendung feststellen soll, welche Endgeräte sich aktuell in einem bestimmten geographischen Bereich (Kreis, Rechteck, Polygon) befinden. Ein rudimentäres Vorgehen hierbei wäre, bei jeder solchen Bereichsanfrage erst die Positionen aller in Frage kommenden Endgeräte zu ermitteln (Polling), um dann im zweiten Schritt festzustellen, welche Endgeräte sich aktuell im gewünschten Bereich aufhalten. Da ein solches Vorgehen bei einer Vielzahl von Bereichsanfragen höchst ineffizient ist, wird jedoch eine Indizierung vorgenommen: Jedes Endgerät übermittelt dafür nach einer bestimmten Position-Update-Strategie (periodisch, distanzbasiert, zonenbasiert, oder basierend auf einem vorgegebenen Gitter) regelmäßig die eigene Position an den Location Server. Dieser speichert die Positionen lokal und indiziert sie. Er ist dadurch in der Lage, Bereichsanfragen effizienter auszuwerten, weil er pro Bereichsanfrage wesentlich weniger Endgeräte pollen muss, da er aufgrund des erstellten Index bereits eine Vielzahl von Endgeräten aus dem gewünschten Bereich ausschließen kann. Leider stellt sich dabei immer das Problem, nach welcher Position-Update-Strategie die Endgeräte indiziert (periodisch, distanzbasiert, etc) und mit welchen konkreten Parametern die Strategie konfiguriert (Zeit-Intervall, Update-Distanz, ...) werden sollen. Es zeigt sich nämlich, dass die Effizienz der Parameterwahl u.a. abhängig ist von folgenden Faktoren: Mobilität der Endgeräte, Häufigkeit der Anfragen, Bereichsgröße der Anfragen, sowie geographische Lage der Anfragen. Problem ist also auch hier, für eine Vielzahl von LBS-Anwendungen, die eine Vielzahl von Bereichsanfragen stellen, dynamisch die passende (effizienteste) Indizierungsmethode zu finden.

- Prüfung der Position Update Requests auf dem mobilen Endgerät basierend auf geographischen Koordinaten zu komplex: Für einige, besonders beschränkte mobile Endgeräte ist die Prüfung auf Enthaltensein bei zonenbasierten Position Update Requests bzw. die Überprüfung zurückgelegter Distanzen bei distanzbasierten Position Update Requests zu komplex. Hierfür müssen nämlich in der Regel geographische Koordinaten (z.B. basierend auf WGS84) auf kartesische Systeme umgewandelt werden. Hierfür werden wiederum mathematische Winkelfunktionen benötigt, die nicht auf jeder Endgeräteplattform vorauszusetzen sind.

- Ein ähnlich gelagertes Problem entsteht bei der Auswertung von wegstreckenbasierten Position Updates. Zu deren Prüfung muß das Endgerät über Topologiedaten verfügen, z.B. des Gebäudes oder des Straßennetzes, in dem es sich gerade befindet. Solche Topologiedaten werden aber oft nur auf der Serverseite vorgehalten, da sie in der Regel sehr umfangreich sind. Wegstreckenbasierte Updates lassen sich demnach auf Endgeräten ohne entsprechende Topologiedaten nicht umsetzen.

## Zusammenfassung der Erfindung

Die vorliegende Erfindung hat zur Aufgabe, die Nachteile des Standes der Technik zu beseitigen oder abzumindern. Diese Aufgabe wird durch die im unabhängigen Anspruch angegebene Erfindung gelöst. Vorteilhafte Ausgestaltungen der Erfindung sind in den Unteransprüchen und der nachfolgenden Beschreibung angegeben.

Erfindungsgemäß ist ein Datenverarbeitungsmodul geschaffen, angeordnet zwischen einem Server und mindestens einem mobilen Endgerät in einem Funknetzwerk mit ortsbezogenen Diensten, wobei das Datenverarbeitungsmodul ausgebildet ist zur Verarbeitung und Beantwortung von an das Endgerät gerichteten Position-Update Anforderungen des Servers.

Vorzugsweise ist das Datenverarbeitungsmodul ausgebildet zum Empfang von Position-Updates von dem Endgerät gemäß einem ersten Kommunikationsprotokoll, und zur Übertragung von Position-Updates an den Server gemäß einem zweiten Kommunikationsprotokoll.

Vorzugsweise ist die zur Verarbeitung von Position-Update Anforderungen des Servers zwischen dem Datenverarbeitungsmodul und dem Endgerät übertragene Datenmenge geringer, als die zwischen dem Datenverarbeitungsmodul und dem Server.

Vorzugsweise ist das Datenverarbeitungsmodul ausgebildet zur Übertragung einer Position-Update Anforderung an das Endgerät in Antwort auf eine oder mehrere Position-Update Anforderungen von dem Server.

Vorzugsweise ist das Datenverarbeitungsmodul derart ausgebildet, dass, wenn am Datenverarbeitungsmodul gleichzeitig mehrere Position-Update Anforderungen des Servers vorliegen, eine der vorliegenden Position-Update Anforderungen ausgewählt wird, und zur Übertragung der ausgewählten Position-Update Anforderungen an das Endgerät.

Vorzugsweise ist das Datenverarbeitungsmodul ausgebildet zur Bestimmung, welche der gleichzeitig vorliegenden Position-Update Anforderungen des Servers am restriktivsten ist, und zur Übertragung nur der restriktivsten Abfrage an das Endgerät.

Vorzugsweise ist das Datenverarbeitungsmodul ausgebildet zum Empfang von distanzbasierten Position-Update Anforderungen des Servers, wobei distanzbasierte Position-Update Anforderungen jeweils eine durch das Endgerät zurückzulegende Distanz darstellen, um einen distanzbasierten Position-Update des Endgerätes auszulösen, und wobei das Datenverarbeitungsmodul ausgebildet ist, zu bestimmen, welche einer Vielzahl von gleichzeitig vorliegenden distanzbasierten Position-Update Anforderungen des Servers der kürzesten durch das Endgerät zurückzulegenden Distanz entspricht, um einen Position-Update auszulösen, und zur Übertragung einer der kürzesten Distanz entsprechenden distanzbasierten Position-Update Anforderung an das Endgerät.

Vorzugsweise ist das Datenverarbeitungsmodul ausgebildet zum Empfang von zonenbasierten Position-Update Anforderungen des Servers, wobei zonenbasierte Position-Update Anforderungen jeweils darstellen, welche Zone das Endgerät zu verlassen oder zu betreten hat, um einen zonenbasierten Position-Update auszulösen, und wobei das Datenverarbeitungsmodul ausgebildet ist, zu bestimmen, welche einer Vielzahl von gleichzeitig vorliegenden zonenbasierten Position-Update Anforderungen des Servers einer restriktivsten Zone entspricht, und zur Übertragung einer der restriktivsten Zone entsprechenden zonenbasierten Position-Update Anforderung an das Endgerät.

Vorzugsweise ist das Datenverarbeitungsmodul ausgebildet zum Empfang von distanzbasierten und zonenbasierten Position-Update Anforderungen des Servers, wobei distanzbasierte Position-Update Anforderungen jeweils eine durch das Endgerät zurückzulegende Distanz darstellen, um einen distanzbasierten Position-Update des Endgerätes auszulösen, und wobei zonenbasierte Position-Update Anforderungen jeweils darstellen, welche Zone das Endgerät zu verlassen oder zu betreten hat, um einen zonenbasierten Position-Update auszulösen, und wobei das Datenverarbeitungsmodul ausgebildet ist, zu bestimmen, welche einer Vielzahl von gleichzeitig vorliegenden distanz- und zonenbasierten Position-Update Anforderungen des Servers der kürzesten durch das Endgerät zurückzulegenden Distanz entspricht, um einen distanz- oder zonenbasierten Position-Update auszulösen, und zur Übertragung einer der kürzesten Distanz entsprechenden distanzbasierten Position-Update Anforderung für das Endgerät.

Vorzugsweise ist das Datenverarbeitungsmodul ausgebildet zum Empfang von distanzbasierten und zonenbasierten Position-Update Anforderungen des Servers, wobei distanzbasierte Position-Update Anforderungen jeweils eine durch das Endgerät zurückzulegende Distanz darstellen, um einen distanzbasierten Position-Update des Endgerätes auszulösen, und wobei zonenbasierte Position-Update Anforderungen jeweils darstellen, welche Zone das Endgerät zu verlassen oder zu betreten hat, um einen zonenbasierten Position-Update auszulösen, und wobei das Datenverarbeitungsmodul ausgebildet ist, zu bestimmen, welche einer Vielzahl von gleichzeitig vorliegenden distanz- und zonenbasierten Position-Update Anforderungen des Servers einer restriktivsten durch das Endgerät zu verlassenden oder zu betretenden Zone entspricht, um einen distanz- oder zonenbasierten Position-Update auszulösen, und zur Übertragung einer der restriktivsten Zone entsprechenden zonenbasierten Position-Update Anforderung für das Endgerät.

Vorzugsweise ist das Datenverarbeitungsmodul ausgebildet zum Empfang von periodischen Position-Update Anforderungen des Servers, wobei periodische Position-Update Anforderungen jeweils eine vorbestimmte Zeit darstellen, nach deren Ablauf das Endgerät einen periodischen Position-Update erzeugt, und wobei das Datenverarbeitungsmodul ausgebildet ist, zu bestimmen, welche einer Vielzahl von gleichzeitig vorliegenden periodischen Position-Update Anforderungen des Servers der kürzesten Zeit bis zum Erzeugen des nächsten periodischen Position-Updates durch das Endgerät entspricht, und zur Übertragung einer der kürzesten Zeit entsprechenden periodischen Position-Update Anforderung an das Endgerät.

Vorzugsweise ist das Datenverarbeitungsmodul ausgebildet zur Erzeugung von periodischen Position-Update Anforderungen für das Endgerät, wobei periodische Position-Update Anforderungen jeweils eine vorbestimmte Zeit darstellen, nach deren Ablauf das Endgerät einen periodischen Position-Update erzeugt, und wobei das Datenverarbeitungsmodul weiterhin ausgebildet ist zum Empfang von distanzbasierten und zonenbasierten Position-Update Anforderungen des Servers, wobei distanzbasierte Position-Update Anforderungen jeweils eine durch das Endgerät zurückzulegende Distanz darstellen, um einen distanzbasierten Position-Update des Endgerätes auszulösen, und wobei zonenbasierte Position-Update Anforderungen jeweils darstellen, welche Zone das Endgerät zu verlassen oder zu betreten hat, um einen zonenbasierten Position-Update auszulösen, und wobei das Datenverarbeitungsmodul ausgebildet ist, zu bestimmen, welche einer Vielzahl von gleichzeitig vorliegenden distanz- und zonenbasierten Position-Update Anforderungen des Servers einer kürzesten Zeit bis zum Erzeugen eines periodischen Position-Updates durch das Endgerät entspricht, und zur Erzeugung einer der kürzesten Zeit entsprechenden periodischen Position-Update Anforderung für das Endgerät.

Vorzugsweise ist das Datenverarbeitungsmodul ausgebildet zum Erzeugen einer neuen Position-Update Anforderung für das Endgerät in Antwort auf

- den Empfang einer Position-Update Anforderung von dem Server, die restriktiver ist als bereits in dem Datenverarbeitungsmodul vorliegende Position-Update Anforderungen, oder die Auswirkungen auf die Restriktivität der bereits in dem Datenverarbeitungsmodul vorliegenden Position-Update Anforderungen hat,
- das Löschen der restriktivsten im Datenverarbeitungsmodul vorliegenden Position-Update Anforderungen durch den Server, oder
- den Erhalt eines Position-Updates vom Endgerät.

Vorzugsweise ist das Datenverarbeitungsmodul ausgebildet zur Verarbeitung von distanzbasierten Position-Update Anforderungen, wobei distanzbasierte Position-Update Anforderungen jeweils eine durch das Endgerät zurückzulegende absolute Distanz darstellen, um einen distanzbasierten Position-Update des Endgerätes auszulösen, und wobei das Datenverarbeitungsmodul ausgebildet ist zur Umwandlung der absoluten Distanz in eine Distanznorm basierend auf geographischen Koordinaten, und zur Erzeugung entsprechender Position-Update Anforderungen für das Endgerät.

Vorzugsweise ist das Datenverarbeitungsmodul ausgebildet zur Verarbeitung von distanzbasierten oder zonenbasierten Position-Update Anforderungen, wobei distanzbasierte Position-Update Anforderungen jeweils eine durch das Endgerät zurückzulegende Distanz darstellen, um einen distanzbasierten Position-Update des Endgerätes auszulösen, und wobei zonenbasierte Position-Update Anforderungen jeweils darstellen, welche Zone das Endgerät zu verlassen oder zu betreten hat, um einen zonenbasierten Position-Update auszulösen, und wobei das Datenverarbeitungsmodul ausgebildet ist zur Referenzierung von Positionen mittels Sequenznummern, und zur Erzeugung von distanzbasierten oder zonenbasierten Position-Update Anforderungen für das Endgerät basierend auf den Sequenznummern.

Vorzugsweise ist das Datenverarbeitungsmodul ausgebildet zur funkbasierten Kommunikation mit dem mobilen Endgerät und/oder dem Server.

Vorzugsweise ist das Datenverarbeitungsmodul ausgebildet zum Empfang von Bereichsanfragen, die durch den Server erzeugt werden, um zu bestimmen, welche Endgeräte sich in den in den Bereichsanfragen enthaltenen Bereichen befinden, und zur Übertragung von distanzbasierten, zonenbasierten oder periodischen Position-Update Anforderungen an die entsprechenden Endgeräte in Antwort auf den Empfang der Bereichsanfragen, wobei distanzbasierte Position-Update Anforderungen jeweils eine durch ein Endgerät zurückzulegende Update-Distanz darstellen, um einen distanzbasierten Position-Update des Endgerätes auszulösen, und wobei zonenbasierte Position-Update Anforderungen jeweils darstellen, welche Update-Zone ein Endgerät zu verlassen oder zu betreten hat, um einen zonenbasierten Position-Update auszulösen, und wobei periodische Position-Update Anforderungen jeweils eine vorbestimmte Zeit darstellen, nach deren Ablauf ein Endgerät einen periodischen Position-Update erzeugt, und wobei das Datenverarbeitungsmodul ausgebildet ist, die Update-Distanz, die Update-Zone oder die Periodizität der distanzbasierten, zonenbasierten bzw. periodischen Position-Update Anforderungen abhängig von der Rate der Bereichsanfragen, der Mobilität der entsprechenden Endgeräte und/oder der Größe der entsprechenden Bereiche dynamisch zu bestimmen.

Vorzugsweise ist das Datenverarbeitungsmodul ausgebildet zur um so restriktiveren Bestimmung der Update-Distanz, der Update-Zone oder der Periodizität der distanzbasierten, zonenbasierten bzw. periodischen Position-Update Anforderungen, je höher die Rate der entsprechenden Bereichsanfragen.

Vorzugsweise ist das Datenverarbeitungsmodul ausgebildet zur um so weniger restriktiven Bestimmung der Update-Distanz oder der Update-Zone der distanzbasierten bzw. zonenbasierten Position-Update Anforderungen, oder zur um so restriktiveren Bestimmung der Periodizität der periodischen Position-Update Anforderungen, je höher die Mobilität der entsprechenden Endgeräte.

Vorzugsweise ist das Datenverarbeitungsmodul ausgebildet zur Bestimmung der Update-Distanz, der Update-Zone oder die Periodizität der distanzbasierten, zonenbasierten bzw. periodischen Position-Update Anforderungen abhängig von der Größe und/oder Lage der den Bereichsanfragen zu Grunde liegenden Bereiche.

Vorzugsweise ist das Datenverarbeitungsmodul ausgebildet zur Ermittelung der Rate von Bereichsanfragen, der Mobilität der entsprechenden Endgeräte und/oder der Größe und/oder der Lage der entsprechenden Bereiche, und zur Bestimmung der Update-Distanz, der Update-Zone oder der Periodizität der distanzbasierten, zonenbasierten bzw. periodischen Position-Update Anforderungen auf Grundlage der ermittelten Werte.

Vorzugsweise ist das Datenverarbeitungsmodul ausgebildet zur Erzeugung von distanzbasierten Position-Update Anforderungen für das Endgerät, wobei distanzbasierte Position-Update Anforderungen jeweils eine durch das Endgerät zurückzulegende Distanz darstellen, um einen distanzbasierten Position-Update des Endgerätes auszulösen, und zum Empfang einer wegstreckenbasierten Position-Update Anforderung des Servers, wobei die wegstreckenbasierte Position-Update Anforderung eine durch das Endgerät zurückzulegende Wegstrecke darstellt, wonach ein wegstreckenbasierter Position-Update des Endgerätes ausgelöst werden soll, und wobei das Datenverarbeitungsmodul ausgebildet ist, anhand von vorgespeicherten Topologieinformationen für jeden innerhalb einer gegebenen Topologie möglichen Pfad der besagten Wegstrecke denjenigen zu bestimmen, der einer kürzesten Distanz entpricht, und zum Erzeugen einer entsprechenden distanzbasierten Position-Update Anforderung für das Endgerät.

Vorzugsweise ist das Datenverarbeitungsmodul ausgebildet

- zur Erzeugung von distanzbasierten Position-Update Anforderungen für das Endgerät, wobei distanzbasierte Position-Update Anforderungen jeweils eine durch das Endgerät zurückzulegende Distanz darstellen, um einen distanzbasierten Position-Update des Endgerätes auszulösen;
- zum Empfang einer wegstreckenbasierten Position-Update Anforderung des Servers, wobei die wegstreckenbasierte Position-Update Anforderung eine durch das Endgerät zurückzulegende Wegstrecke darstellt, wonach ein wegstreckenbasierter Position-Update des Endgerätes ausgelöst werden soll,
- zur Bestimmung einer Distanz $d(s, p)$ zwischen der Position $s$ des Endgerätes und einer Anzahl von Punkten $p$ auf jedem innerhalb einer gegebenen Topologie möglichen Pfad der besagten Wegstrecke,
- zur Bestimmung der jeweils maximalen Distanz $dmax$ innerhalb jedes Pfades,
- zur Bestimmung der minmalen Distanz $dmin$ aus den maximalen Distanzen $dmax,$ und
- zur Erzeugung einer der kleinsten Distanz $dmin$ entsprechenden distanzbasierten Position-Update Anforderung für das Endgerät.

Erfindungsgemäß ist weiterhin ein mobiles Endgerät zur Kommunikation mit dem Datenverarbeitungsmodul geschaffen, wobei das Endgerät ausgebildet ist zum Löschen von Position-Update Anforderungen des Datenverarbeitungsmoduls in Antwort auf den Erhalt einer neuen Position-Update Anforderung des Datenverarbeitungsmoduls oder auf die Übertragung eines Position-Updates an das Datenverarbeitungsmodul.

Das Endgerät kann ausgebildet sein zur Erzeugung eines distanzbasierten Position-Updates für das Datenverarbeitungsmodul in Antwort auf den Empfang einer distanzbasierten Position-Update Anforderung auf Grundlage einer Distanznorm basierend auf geographischen Koordinaten.

Das Endgerät kann ausgebildet sein zur Erzeugung und Speicherung von Sequenznummern, die jeweiligen vergangenen Positionen des Endgerätes zugeordnet sind, und zur Übertragung eines Position-Updates oder einer Polling Response an das Datenverarbeitungsmodul, das die aktuelle Position des Endgerätes und eine der Sequenznummern enthält.

Das Endgerät kann ausgebildet sein zum Empfang von distanzbasierten Position-Update Anforderungen des Datenverarbeitungsmoduls, wobei distanzbasierte Position-Update Anforderungen jeweils eine durch das Endgerät zurückzulegende absolute Distanz darstellen, um einen distanzbasierten Position-Update des Endgerätes auszulösen, und wobei das Endgerät ausgebildet ist zur Umwandlung der absoluten Distanz in eine Distanznorm basierend auf geographischen Koordinaten mittels einer vorgespeicherten Tabelle, zur Bearbeitung der jeweiligen distanzbasierten Position-Update Anforderung.

Das Endgerät kann ausgebildet sein Bestimmung der Mobilität des Endgerätes, und vorzugsweise auch zur Mittelung der derart bestimmten Mobilität, und zur Übertragung des Ergebnisses an das Datenverarbeitungsmodul.

Das Endgerät kann ausgebildet sein zum Empfang von Bereichsanfragen, durch die bestimmt werden soll, welche Endgeräte sich in vorbestimmten Bereichen befinden, und zur Mittelung der Rate der Bereichsanfragen, der Mobilität der jeweiligen Endgeräte und/oder der Größe der jeweiligen Bereiche, und zur Übertragung der gemittelten Werte an das Datenverarbeitungsmodul zur weiteren Verarbeitung der Bereichsanfragen auf Grundlage der gemittelten Werte.

## Kurzbeschreibung der Zeichnungen

Figur 1 zeigt den Nachrichtenaustausch während einer Positionierungssitzung gemäß dem Stand der Technik.

Figur 2 zeigt ein Kompressionsmodul zur energie-, CPU- und dateneffizienten Bündelung und Übertragung von Position Update Requests gemäß einer Ausgestaltung der vorliegenden Erfindung.

Figur 3 zeigt eine minimale Update-Distanz beim Betreten bzw. Verlassen von Polygonförmigen Update-Zonen, wie sie in einer Ausgestaltung der vorliegenden Erfindung bestimmt wird.

## Beschreibung von Ausführungsbeispielen der Erfindung

Nachfolgend wird die Erfindung anhand von beispielhaften und nicht einschränkenden Ausgestaltungen mit Bezugnahme auf die Zeichnungen beschrieben.

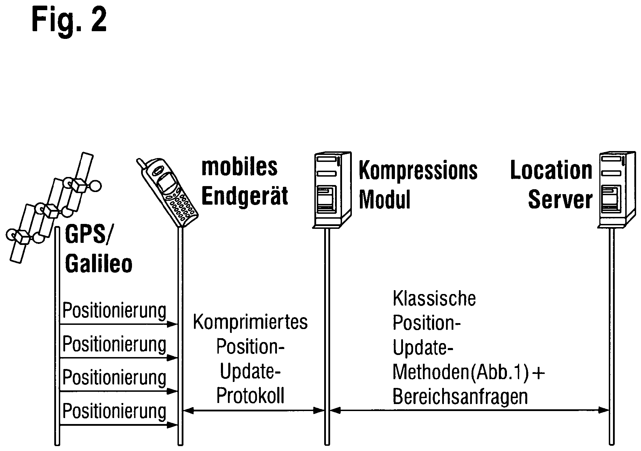

Gemäß einer Ausgestaltung der Erfindung ist ein Kompressionsmodul vorgesehen, welches sich zwischen Location Server und dem mobilen Endgerät befindet, wie in Figur 2 dargestellt. Das Modul kommuniziert mit dem Location Server entsprechend den bekannten Position-Update-Methoden und nimmt für jedes Zielobjekt die Position Update Requests und Polling Requests einer Vielzahl von LBS-Anwendungen gleichzeitig entgegen, und verwaltet und beantwortet diese. Neben diesen bekannten Position-Update-Methoden nimmt das Modul Range Queries (Bereichsanfragen) vom Location Server für eine Vielzahl von Anwendungen entgegen und beantwortet diese. Das Kompressionsmodul kann mit dem Location Server entweder fest (z.B. monolithisch) oder lose (z.B. per Datenfernübertragung) gekoppelt sein. Mit dem Endgerät kommuniziert das Kompressionsmodul über ein einfacheres, komprimiertes Protokoll, welches zwar die Anforderungen (=Position Update Requests und Polling Requests) aller LBS-Anwendungen korrekt erfüllt, gleichzeitig aber die oben genannten Probleme vermeidet und die folgenden Besonderheiten hat:

- Höchstens ein paralleler Position Update Request pro Typ pro Endgerät. In einer Ausführung der Erfindung wird unabhängig davon, wie viele distanzbasierte, periodische, oder zonenbasierte Position Update Requests seitens des Location Servers beim Kompressionsmodul anliegen, an das mobile Endgerät immer höchstens ein Position Update Request pro Typ übertragen. Dieser Position Update Request wird vom Kompressionsmodul dynamisch so bestimmt, dass der restriktivste aller anliegenden Position Update Requests des Typs gerade erfüllt werden kann.

  Liegen z.B. 10 distanzbasierte Position Update Requests für ein bestimmtes Zielobjekt beim Kompressionsmodul an, so überträgt das Kompressionsmodul dem Endgerät nur den restriktivsten dieser Requests, also den mit der kleinsten Update-Distanz. Ähnliches gilt bei zonenbasierten und periodischen Updates. Hier wird respektive eine restriktivste Zone und die kürzeste Zeit zum nächsten Update an das Endgerät übertragen.

  Alternativ werden neue Position Update Requests erzeugt, die sicherstellen, dass alle vorliegenden Position Update Requests überwacht werden können.

  In einer Ausführung der Erfindung errechnet das Kompressionsmodul eine restriktivste Zone, die sich aus einer Vielzahl beim Kompressionsmodul anliegender zonenbasierter und distanzbasierter Position Update Requests ergibt, so dass, so lange die Zone nicht verlassen wird, keiner der anliegenden Position Update Requests ein Position Update generieren würde. In einer Ausführung ergibt sich für diese Zone eine (Multi-) Polygon- oder (Multi-) Polyline-Form.

  In einer Ausführung der Erfindung gilt der vom Kompressionsmodul errechnete und an das Endgerät übertragene Position Update Request höchstens bis zum nächsten Position Update des Endgeräts. Dann wird der Request implizit (also ohne eine entsprechende Löschnachricht (8)) vom Endgerät gelöscht. Soll das Kompressionsmodul weitere Position Updates erhalten, so muss ein erneuter Position Update Request zum Endgerät übertragen werden.

  In einer Ausführung der Erfindung gilt, dass, wenn vom Kompressionsmodul ein neuer Position Update Request zum Endgerät übertragen wird, ohne dass das Endgerät vorher ein Position Update gemeldet hat, der u.U. auf dem Endgerät bestehende Position Update Request des entsprechenden Typs durch den neuen Request oder einen von diesem abhängig erzeugten Request ersetzt wird.

Entsprechend dieser Regeln können in einer Ausführung der Erfindung also die folgenden Fälle zum Übertragen eines Position Update Requests vom Kompressionsmodul zum Endgerät führen.

- Vom Location Server aus kommt beim Kompressionsmodul ein neuer Position Update Request für das Endgerät an, der restriktiver ist, als derjenige, der momentan auf dem Endgerät installiert ist, oder der Auswirkungen auf dessen Restriktivität hat.
- Vom Location Server aus wird beim Kompressionsmodul derjenige Position Update Request gelöscht, der zuvor als restriktivster an das Endgerät übertragen wurde (es kann nun also einer der weniger restriktiven Position Update Requests nachrücken).
- Das Endgerät meldet ein Position Update.

• Einziger Position Update Request bei zonen- u. distanzbasierten Updates basiert auf Minimaldistanz: In einer Ausführung der Erfindung werden eine beliebige Anzahl von zonen- und distanzbasierten Update Requests zu höchstens einem restriktivsten distanzbasierten Position Update Request zusammengeführt.

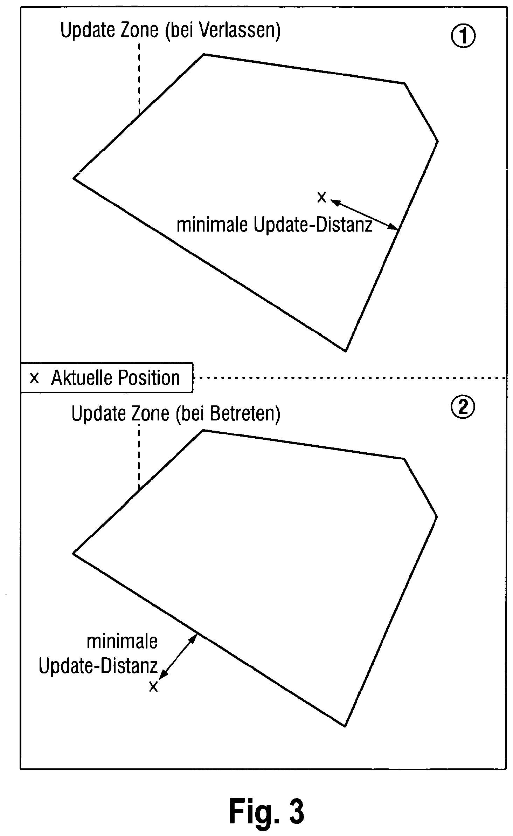

Dieser Ansatz beruht auf der Beobachtung, dass das mobile Endgerät zum Verlassen bzw. Betreten einer geographischen Zone - ausgehend von seiner aktuellen Position - immer eine bestimmte minimale Update-Distanz zurücklegen muss. Diese minimale Update-Distanz ist in Figur 3 beispielhaft für Polygonförmige Zonen dargestellt, lässt sich aber für alle Typen von zonenbasierten Updates berechnen.

Liegen nun eine Reihe von distanzbasierten und zonenbasierten Position Update Requests für ein Endgerät beim Kompressionsmodul an, so wird daraus eine einzige restriktivste Distanz errechnet. Diese ergibt sich als Minimum von kleinster Update-Distanz aller anliegenden distanzbasierten Update Requests und kleinster minimaler Update-Distanz aller anliegenden zonenbasierten Update Requests.

Entsprechend wird dann nur ein distanzbasierter Position Update Request an das Endgerät übertragen, der die aus allen zonen- und distanzbasierten Update Requests errechnete restriktivste Update-Distanz enthält.

Alternativ kann auch ein periodischer Update Request erzeugt werden, der auf Grundlage der Höchstgeschwindigkeit des Endgerätes und der minimalen Distanz bestimmt wird.

• Update-Distanz kann durch Distanznorm basierend auf geographischer Länge/Breite spezifiziert werden: Wie oben beschrieben, kann die Berechnung von Distanzen basierend auf geographischen Koordinaten, wie sie z.B. von GPS geliefert werden, auf bestimmten mobilen Endgeräten nicht möglich sein. Eine solche Distanzberechung wäre jedoch zur Evaluierung distanzbasierter Position Update Requests auf dem Endgerät nötig. Aus diesem Grund wird in einer Ausführung der Erfindung eine an das Endgerät zu übertragene Update-Distanz vom Kompressionsmodul weiter vorverarbeitet: Anstelle einer euklidischen Distanz, z.B. in Meter, wird deshalb vom Kompressionsmodul die Distanz in einer Distanznorm basierend auf geographischer Breite und Länge ausgedrückt.

Ein Beispiel: Die aktuelle Position eines Endgeräts sei 48 Grad geographischer Breite und 11 Grad geographischer Länge. Vom Kompressionsmodul aus sei eine Update-Distanz von 250 Metern zu übertragen. Das Kompressionsmodul rechnet dann die Differenz der geographischen Breite des aktuellen Standorts zu einem Standort aus, der 250 Meter weiter nördlich liegt, und es ergibt sich z.B. ein Wert von 48.1 Grad (Wert fiktiv). Dasselbe wird mit der geographischen Länge und einem Ort, der 250 Meter weiter östlich liegt, durchgeführt, und es ergibt sich z.B. ein Wert von 11.2 Grad (Wert fiktiv). Dann würde das Kompressionsmodul basierend auf den Differenzen $\Delta lat$ = 48.1 - 48 und $\Delta long$ = 11.2 - 11 und einem Normfaktor

$$fac_{norm} = \frac{\Delta lat}{\Delta long}$$

dem Endgerät den Distanzschwellwert

$$d_{thres} = \Delta lat$$

und den der Distanznorm (Distanzfunktion)

$$f_d = \sqrt{\Delta lat_e{}^2 + (\Delta long_e * fac_{norm})^2}$$

zu Grunde liegenden Normfaktor $fac_{norm}$ übermitteln. Das Endgerät würde dann die vom vorgegebenen Ausgangspunkt ermittelten Abweichungen $\Delta lat_e$ und $\Delta long_e$ in $f_d$ einsetzen und das Position Update erst senden, wenn

$$f_d(\Delta lat_e, \Delta long_e) \geq d_{thres}.$$

Wie im Beispiel verdeutlicht, kann das Endgerät nun anhand seiner eigenen geographischen Position sehr CPU-effizient nachprüfen, ob die ursprüngliche Update-Distanz (in Metern) überwunden wurde, ohne die Anwendung mathematischer Winkelfunktionen. Die zu Grunde liegende Idee ist also, die geographischen Koordinaten lokal als kartesisch anzusehen und für entsprechende Normfunktionen (Distanzfunktionen) zu verwenden, was insbesondere für Update-Distanzen im Bereich von bis zu einigen Kilometern vorteilhaft ist.

Neben der Distanzfunktion $f_d$ ließen sich in anderen Ausführungen der Erfindung auch andere Distanzfunktionen verwenden, insbesondere nichtquadratisch Funktionen. Ein Beispiel wäre eine normierte Version der Manhattan-Distanz, welche lineare Faktoren einbezieht. In einer Ausführung der Erfindung findet die Umwandlung von euklidischer Update-Distanz (z.B. in Meter) auf den Normfaktor $fac_{norm}$ und den Distanzschwellwert $d_{thres}$ erst auf dem Endgerät statt. Das Kompressionsmodul schickt dann, wie gehabt, euklidische Distanzen (z.B. in Meter) an das Endgerät.

In einer Ausführung der Erfindung findet die Umwandlung von ursprünglicher Update-Distanz (z.B. in Meter) auf den Normfaktor $fac_{norm}$ und den Distanzschwellwert $d_{thres}$ auf dem Endgerät anhand von auf dem Endgerät vorinstallierter Tabellen statt.

Es sei betont, dass die Variablen $fac_{norm}$ und $d_{thres}$ nur beispielhaften Charakter haben. Ein ähnliches oder gleiches Ziel wie gerade beschrieben lässt sich auch erreichen, in dem andere Variablen oder die gleichen Variablen in einer anderen Form übermittelt werden. Beispielsweise ließen sich auch $\Delta l_{at}$ und $\Delta long$ an das Endgerät übertragen oder auf dem Endgerät anhand von vorgespeicherten Tabellen ableiten.

- Distanzbasierte Updates zur Umsetzung von wegstreckenbasierten Updates: Für den oben beschriebenen Fall, dass ein Endgerät nicht über die notwendigen Topologiedaten zur Realisierung von wegstreckenbasierten Updates verfügt, verschattet das Datenverarbeitungsmodul diesen Missstand vor dem Location Server folgendermaßen:

Das Datenverarbeitungsmodul, welches über die notwendigen Topologiedaten verfügt, greift dafür auf distanzbasierte Position Updates zurück, wobei die Update-Distanz vom Modul jeweils so gewählt wird, dass die gewünschte Wegstrecke nicht überschritten wird. Das Modul entscheidet dann bei jedem distanzbasierten Position Update des Endgeräts, ob die gewünschte Wegstrecke bereits zurückgelegt wurde und das Position Update an den Location Server weitergeleitet werden kann, oder ob ein weiterer distanzbasierter Position Update Request auf das Endgerät zu übermitteln ist.

Ein Problem in diesem Zusammenhang ist es, bezüglich einer vorgegebenen Wegstrecke und einer Topologie (z.B. des Straßennetzes oder des Inneren eines Gebäudes, in dem sich das Endgerät befindet) die an das Endgerät zu übermittelnde Update-Distanz so zu wählen, dass möglichst wenige Position Updates entstehen (es ist also eine möglichst große Update-Distanz zu finden), die Wegstrecke aber nicht ohne die Meldung eines Position Update überschritten wird (Korrektheit).

In einem ersten Ansatz wird die Update-Distanz bezüglich einer vorgegebenen Topologie $t$ und einer Update-Wegstrecke $w$ z.B. folgendermaßen gewählt: Für den Endpunkt $p$ jedes möglichen Pfades der Länge $w$ vom aktuellen Standort $s$ des Endgeräts aus innerhalb von $t$, berechne die (Luftlinien-)Distanz $d(p,s)$. Wähle die kürzeste all dieser Distanzen $d(p,s)$ als Update-Distanz.

Es ist leicht einzusehen, dass auf diese Weise ein wegstreckenbasierter Position Update Request korrekt erfüllt werden kann. Solange nämlich die so gewählte Update-Distanz nicht überschritten wird, wird auch nicht die Wegstrecke $w$ überschritten.

Je nach Umgebung kann dieser erste, einfache Ansatz hat jedoch den Nachteil haben, dass relativ viele Position Updates vom Endgerät erzeugt werden, die jedoch keine Überschreitung der geforderten Wegstrecke bedeuten (was bewirken würde, dass das Datenverarbeitungsmodul das Position Update an den Location Server weiterreichen würde) und auch entsprechend oft neue distanzbasierte Position Update Requests vom Datenverarbeitungsmodul an das Endgerät übermittelt werden müssen.

Führt z.B. in einem Gebäude ein Pfad einer bestimmten Länge $w$ über das Treppenhaus von einem Büro $s$ in das direkt darunterliegende Büro $p$, so ist - trotz einer relativ langen Wegstrecke $w$ - die so gewählte Update-Distanz $d(p,s)$, die der Luftlinien-Distanz der beiden Büros entspricht, sehr klein.

Eine Verbesserung dieses Ansatzes sieht Folgendes vor: Für jeden möglichen Pfad der Länge $w$ vom aktuellen Standort $s$ des Endgeräts aus innerhalb von $t$, berechne für alle Pfadpunkte $p$ die (Luftlinien-)Distanz $dw(p,s)$. Für jeden Pfad, wähle aus diesen $dw(p,s)$ das Maximum $dmax$. Aus allen so ermittelten $dmax$-Werten (einer pro Pfad), wähle das Minimum aus und setze es als die Update-Distanz ein. Intuitiv entspricht diese Update-Distanz einer Art "potentieller Energie", die zu überwinden notwendig ist, um die gewünschte Wegstrecke zu erreichen.

Im Beispiel könnte es sein, dass die beiden Büros nur über ein Treppenhaus verbunden sind. Die Update-Distanz entspräche dann also der Wegstrecke von Büro $s$ zum Treppenhaus - ein unter Umständen recht langer Weg - , weil klar ist, dass die Zielperson diesen "potentiellen Weg" überwinden muss, um das Büro $p$ zu erreichen.

Dieser Ansatz führt zu größeren Update-Distanzen und somit zu einer reduzierten Anzahl von Position Updates im Vergleich zur der einfacheren ersten Strategie. Leicht lässt sich auch die Korrektheit des verbesserten Ansatzes zeigen.

- Mobiles Endgerät führt Sequenznummern für Polling Responses und Position Updates, die zur späteren Referenzierung dienen: Wie oben beschrieben kommen in der Erfindung distanzbasierte Updates zum Einsatz. Diese beziehen sich jeweils auf eine letzte, dem Kompressionsmodul bekannte Position des Endgeräts. Wird ein distanzbasierter Update Request an das Endgerät übertragen, so muss sichergestellt werden, dass Kompressionsmodul und Endgerät diesen Request auf die gleiche Ausgangsposition des Endgeräts beziehen.

Eine mögliche Lösung dazu ist, die letzte Position des Endgeräts, auf die sich das Kompressionsmodul bezieht, zusammen mit der Update-Distanz zum Endgerät hin zu übertragen. Diese Lösung überträgt jedoch unnötig viele Daten (eine geographische Position pro Update Request z.B. zu mind. 16 bytes). In einer Ausführung der Erfindung wird deshalb folgender Ansatz gewählt:

- Mit jeder Polling Response und mit jedem Position Update (durch die das Endgerät schließlich dem Kompressionsmodul seine aktuelle Position mitteilt) überträgt das Endgerät eine selbstgewählte Sequenznummer (die z.B. 1 byte lang sein kann).
- Sowohl das Kompressionsmodul als auch das Endgerät speichern die letzten n bzw. m Positionen und entsprechende Sequenznummern.
- Sendet das Kompressionsmodul dem Endgerät nun einen neuen Position Update Request, der sich auf eine bestimmte Position des Endgeräts bezieht, so wird lediglich die dazu passende Sequenznummer übermittelt, nicht die eigentlichen Positionsdaten.
- Das Endgerät kann dann anhand der empfangenen Sequenznummer auf die (zuvor an das Kompressionsmodul übermittelte und gespeicherte) Positionsinformation zurückgreifen und den Position Update Request korrekt auswerten.
- In einer Ausführung der Erfindung gilt: Ist die empfangene Sequenznummer dem Endgerät unbekannt bzw. aus Sicht des Endgeräts veraltet, so wird sofort ein Position Update an das Kompressionsmodul gesendet.

• Kompressionsmodul nimmt dynamische Indizierung für Bereichsanfragen vor: Um Bereichsanfragen möglichst effizient zu beantworten, nimmt das Kompressionsmodul eine dynamische Indizierung vor, dass heißt, es werden entweder periodische, distanzbasierte, oder zonenbasierte Update Requests den Endgeräten zugeteilt, wobei die Periodizität, Update-Distanz oder Update-Zone dynamisch anhand folgender Parameter gewählt wird (die auf diese Weise dynamisch erhaltenen Update-Parametern für ein Endgerät durchlaufen danach wieder möglicherweise alle oben beschriebenen Optimierungsschritte des Position-Update-Protokolls):

- Je höher die Rate von Bereichsanfragen, für die ein bestimmtes Endgerät in Frage kommt, desto restriktiver ist die dem Endgerät zugeteilte Periodizität, Update-Distanz oder Update-Zone. Diese Rate kann entweder global gemessen werden, oder sich auf ein bestimmtes Gebiet beziehen, in dem sich das Endgerät mit einer bestimmten Wahrscheinlichkeit aufhält.
- Je höher die Mobilität eines Endgeräts, desto weniger restriktiv ist die dem Endgerät zugeteilte , Update-Distanz oder Update-Zone, bzw. desto höher die Periodizität.
- Ein weiterer Parameter, der die Restriktivität der dem Endgerät zugeteilten Periodizität, Update-Distanz oder Update-Zone beeinflusst, ist die Größe und Lage der den Bereichsanfragen zu Grunde liegenden Bereiche.
- All diese Eingangsparameter (Anfragerate, Mobilität, Größe der Bereiche) werden regelmäßig global oder in Teilgebieten gemessen und eventuell gemittelt, eventuell zeitlich; z.B. können sich diese Werte immer auf die letzten 24 Stunden beziehen. Verändern sich diese so abgeleiteten Eingangsparameter dann aufgrund neuer Messungen, so werden den betroffenen Endgeräten global oder in Teilgebieten neue (entweder weniger restriktive oder restriktivere) Update-Parameter zugeteilt.

Anzumerken ist, dass die beschriebenen Ausgestaltungen lediglich beispielhafter Natur sind. Weitere Ausgestaltungen, Abwandlungen und Variationen sowie Vorteile der vorliegenden Erfindung sind für den Fachmann aus der Offenbarung ohne Weiteres erkennbar und realisierbar, ohne dass er dabei den Rahmen der vorliegenden Erfindung verlässt.

Die vorliegende Erfindung umfasst ein Datenverarbeitungsmodul, ein mobiles Endgerät sowie eine Datenverarbeitungsvorrichtung, die jeweils ausgebildet sind, um die in den Ansprüchen und der Beschreibung angegebene Merkmale einzeln oder in Kombination zu verwirklichen. Die Erfindung kann ebenso als Verfahren realisiert werden, das auf einem Datenverarbeitungsmodul, einem mobiles Endgerät oder einer Datenverarbeitungsvorrichtung ausgeführt werden kann und die beschriebenen und beanspruchten Merkmale verwirklicht. Die Merkmale der nachfolgenden Ansprüche sind untereinander kombinierbar.

**Patentansprüche**

1. Datenverarbeitungsmodul, angeordnet zwischen einem Server und mindestens einem mobilen Endgerät in einem Funknetzwerk mit ortsbezogenen Diensten, wobei das Datenverarbeitungsmodul ausgebildet ist zur Verarbeitung und Beantwortung von an das Endgerät gerichteten Position-Update Anforderungen des Servers, **dadurch gekennzeichnet, dass** das Datenverarbeitungsmodul ausgebildet ist

- zur Erzeugung von distanzbasierten Position-Update Anforderungen für das Endgerät, wobei die distanzbasierten Position-Update Anforderungen jeweils eine Distanz zwischen einer aktuellen und einer vorherigen Position des Endgerätes darstellen, wobei bei Erreichen dieser Distanz ein distanzbasierter Position-Update des Endgerätes ausgelöst werden soll;

- zum Empfang einer wegstreckenbasierten Position-Update Anforderung des Servers, wobei die wegstreckenbasierte Position-Update Anforderung eine durch das Endgerät zurückzulegende Wegstrecke darstellt, wobei nach Zurücklegen der zurückzulegenden Wegstrecke ein wegstreckenbasierter Position-Update des Endgerätes ausgelöst werden soll,

- zur Bestimmung, für jeden möglichen Pfad, der der zurückzulegenden Wegstrecke innerhalb einer gegebenen Topologie entspricht, einer Distanz $d(s, p)$ zwischen einer Position $s$ des Endgerätes und jedem von einer Anzahl von Punkten $p$ auf dem Pfad,

- zur Bestimmung, für jeden der möglichen Pfade, einer maximalen Distanz $dmax$ aus den für die Punkte $p$ auf dem Pfad bestimmten Distanzen $d(s, p)$,

- zur Bestimmung der kleinsten der maximalen Distanzen $dmax$, und

- zur Erzeugung einer der kleinsten der maximalen Distanzen $dmax$, entsprechenden distanzbasierten Position-Update Anforderung für das Endgerät.

2. Datenverarbeitungsmodul nach Anspruch 1, ausgebildet zum Empfang von Position-Updates von dem Endgerät gemäß einem ersten Kommunikationsprotokoll, und zur Übertragung von Position-Updates an den Server gemäß einem zweiten Kommunikationsprotokoll, wobei die zur Verarbeitung von Position-Update Anforderungen des Servers zwischen dem Datenverarbeitungsmodul und dem Endgerät übertragene Datenmenge vorzugsweise geringer ist, als die zwischen dem Datenverarbeitungsmodul und dem Server.

3. Datenverarbeitungsmodul nach einem der vorhergehenden Ansprüche, ausgebildet zur Übertragung einer Position-Update Anforderung an das Endgerät in Antwort auf eine oder mehrere Position-Update Anforderungen von dem Server.

4. Datenverarbeitungsmodul nach Anspruch 3, wobei wenn am Datenverarbeitungsmodul gleichzeitig mehrere Position-Update Anforderungen des Servers vorliegen, das Datenverarbeitungsmodul ausgebildet ist zur Auswahl einer der vorliegenden Position-Update Anforderungen, und zur Übertragung der ausgewählten Position-Update Anforderungen an das Endgerät und vorzugsweise zur Bestimmung, welche der gleichzeitig vorliegenden Position-Update Anforderungen des Servers am restriktivsten ist, und zur Übertragung nur der restriktivsten Abfrage an das Endgerät.

5. Datenverarbeitungsmodul nach Anspruch 4, ausgebildet zum Empfang von distanzbasierten und/oder zonenbasierten Position-Update Anforderungen des Servers, wobei distanzbasierte Position-Update Anforderungen jeweils eine durch das Endgerät zurückzulegende Distanz darstellen, um einen distanzbasierten Position-Update des Endgerätes auszulösen, und wobei zonenbasierte Position-Update Anforderungen jeweils darstellen, welche Zone das Endgerät zu verlassen oder zu betreten hat, um einen zonenbasierten Position-Update auszulösen, und wobei das Datenverarbeitungsmodul ausgebildet ist, zu bestimmen, welche einer Vielzahl von gleichzeitig vorliegenden distanz- und zonenbasierten Position-Update Anforderungen des Servers der kürzesten durch das Endgerät zurückzulegenden Distanz entspricht, um einen distanz- oder zonenbasierten Position-Update auszulösen, und zur Übertragung einer der kürzesten Distanz entsprechenden distanzbasierten Position-Update Anforderung für das Endgerät.

6. Datenverarbeitungsmodul nach Anspruch 4, ausgebildet zum Empfang von distanzbasierten und/oder zonenbasierten Position-Update Anforderungen des Servers, wobei distanzbasierte Position-Update Anforderungen jeweils eine durch das Endgerät zurückzulegende Distanz darstellen, um einen distanzbasierten Position-Update des Endgerätes auszulösen, und wobei zonenbasierte Position-Update Anforderungen jeweils darstellen, welche Zone das Endgerät zu verlassen oder zu betreten hat, um einen zonenbasierten Position-Update auszulösen, und wobei das Datenverarbeitungsmodul ausgebildet ist, zu bestimmen, welche einer Vielzahl von gleichzeitig vorliegenden distanz- und zonenbasierten Position-Update Anforderungen des Servers einer restriktivsten durch das Endgerät zu verlassenden oder zu betretenden Zone entspricht, um einen distanz- oder zonenbasierten Position-Update auszulösen, und zur Übertragung einer der restriktivsten Zone entsprechenden zonenbasierten Position-Update Anforderung für das Endgerät.

7. Datenverarbeitungsmodul nach Anspruch 4, ausgebildet zum Empfang von periodischen, distanzbasierten und/oder zonenbasierten Position-Update Anforderungen des Servers, wobei periodische Position-Update Anforderungen jeweils eine vorbestimmte Zeit darstellen, nach deren Ablauf das Endgerät einen periodischen Position-Update erzeugt, wobei distanzbasierte Position-Update Anforderungen jeweils eine durch das Endgerät zurückzulegende Distanz darstellen, um einen distanzbasierten Position-Update des Endgerätes auszulösen, und wobei zonenbasierte Position-Update Anforderungen jeweils darstellen, welche Zone das Endgerät zu verlassen oder zu betreten hat, um einen zonenbasierten Position-Update auszulösen, und wobei das Datenverarbeitungsmodul ausgebildet ist, zu bestimmen, welche einer Vielzahl von gleichzeitig vorliegenden distanz- und zonenbasierten Position-Update Anforderungen des Servers einer kürzesten Zeit bis zum Erzeugen eines periodischen Position-Updates durch das Endgerät entspricht, und zur Erzeugung einer der kürzesten Zeit entsprechenden periodischen Position-Update Anforderung für das Endgerät.

8. Datenverarbeitungsmodul nach einem der vorhergehenden Ansprüche, ausgebildet zum Erzeugen einer neuen Position-Update Anforderung für das Endgerät in Antwort auf

  - den Empfang einer Position-Update Anforderung von dem Server, die restriktiver ist als bereits in dem Datenverarbeitungsmodul vorliegende Position-Update Anforderungen, oder die Auswirkungen auf die Restriktivität der bereits in dem Datenverarbeitungsmodul vorliegenden Position-Update Anforderungen hat,
  - das Löschen der restriktivsten im Datenverarbeitungsmodul vorliegenden Position-Update Anforderungen durch den Server, oder
  - den Erhalt eines Position-Updates vom Endgerät.

9. Datenverarbeitungsmodul nach einem der vorhergehenden Ansprüche, ausgebildet zum Empfang von Bereichsanfragen, die durch den Server erzeugt werden, um zu bestimmen, welche Endgeräte sich in den in den Bereichsanfragen enthaltenen Bereichen befinden, und zur Übertragung von distanzbasierten, zonenbasierten oder periodischen Position-Update Anforderungen an die entsprechenden Endgeräte in Antwort auf den Empfang der Bereichsanfragen, wobei distanzbasierte Position-Update Anforderungen jeweils eine durch ein Endgerät zurückzulegende Update-Distanz darstellen, um einen distanzbasierten Position-Update des Endgerätes auszulösen, und wobei zonenbasierte Position-Update Anforderungen jeweils darstellen, welche Update-Zone ein Endgerät zu verlassen oder zu betreten hat, um einen zonenbasierten Position-Update auszulösen, und wobei periodische Position-Update Anforderungen jeweils eine vorbestimmte Zeit darstellen, nach deren Ablauf ein Endgerät einen periodischen Position-Update erzeugt, und wobei das Datenverarbeitungsmodul ausgebildet ist, die Update-Distanz, die Update-Zone oder die Periodizität der distanzbasierten, zonenbasierten bzw. periodischen Position-Update Anforderungen abhängig von der Rate der Bereichsanfragen, der Mobilität der entsprechenden Endgeräte und/oder der Größe der entsprechenden Bereiche dynamisch zu bestimmen.

10. Datenverarbeitungsmodul nach Anspruch 9, ausgebildet zur um so restriktiveren Bestimmung der Update-Distanz, der Update-Zone oder der Periodizität der distanzbasierten, zonenbasierten bzw. periodischen Position-Update Anforderungen, je höher die Rate der entsprechenden Bereichsanfragen, und/oder zur um so weniger restriktiven Bestimmung der Update-Distanz oder der Update-Zone der distanzbasierten bzw. zonenbasierten Position-Update Anforderungen, oder zur um so restriktiveren Bestimmung der Periodizität der periodischen Position-Update Anforderungen, je höher die Mobilität der entsprechenden Endgeräte.

11. Datenverarbeitungsmodul nach Anspruch 9, ausgebildet zur Bestimmung der Update-Distanz, der Update-Zone oder die Periodizität der distanzbasierten, zonenbasierten bzw. periodischen Position-Update Anforderungen abhängig von der Größe und/oder Lage der den Bereichsanfragen zu Grunde liegenden Bereiche.

12. Datenverarbeitungsmodul nach einem der Ansprüche 9 bis 11, ausgebildet zur Ermittelung der Rate von Bereichsanfragen, der Mobilität der entsprechenden Endgeräte und/oder der Größe und/oder der Lage der entsprechenden Bereiche, und zur Bestimmung der Update-Distanz, der Update-Zone oder der Periodizität der distanzbasierten, zonenbasierten bzw. periodischen Position-Update Anforderungen auf Grundlage der ermittelten Werte.

13. Datenverarbeitungsmodul nach einem der vorhergehenden Ansprüche, ausgebildet zur Erzeugung von distanzbasierten Position-Update Anforderungen für das Endgerät, wobei distanzbasierte Position-Update Anforderungen jeweils eine durch das Endgerät zurückzulegende Distanz darstellen, um einen distanzbasierten Position-Update des Endgerätes auszulösen, und zum Empfang einer wegstreckenbasierten Position-Update Anforderung des Servers, wobei die wegstreckenbasierte Position-Update Anforderung eine durch das Endgerät zurückzulegende Wegstrecke darstellt, wonach ein wegstreckenbasierter Position-Update des Endgerätes ausgelöst werden soll, und wobei das Datenverarbeitungsmodul ausgebildet ist, anhand von vorgespeicherten Topologieinformationen für jeden innerhalb einer gegebenen Topologie möglichen Pfad der besagten Wegstrecke denjenigen zu bestimmen, der einer kürzesten Distanz entpricht, und zum Erzeugen einer entsprechenden distanzbasierten Position-Update Anforderung für das Endgerät.

14. Mobiles Endgerät zur Kommunikation mit dem Datenverarbeitungsmodul nach einem der vorhergehenden Ansprüche, wobei das Endgerät ausgebildet ist zum Löschen von Position-Update Anforderungen des Datenverarbeitungsmoduls in Antwort auf den Erhalt einer neuen Position-Update Anforderung des Datenverarbeitungsmoduls oder auf die Übertragung eines Position-Updates an das Datenverarbeitungsmodul.

**Claims**

1. Data processing module, located between a server and at least one mobile terminal in a radio network with location-based services, wherein the data processing module is designed for processing and answering position-update requests of the server directed to the terminal, **characterized in that** the data processing module is designed

> - for creating distance-based position-update requests for the terminal, wherein the distance-based position-update requests in each case represent a distance between a current and a previous position of the terminal, wherein a distance-based position-update of the terminal is to be triggered upon reaching this distance;
> - for receiving a stretch of way-based position-update request of the server, wherein the stretch of way-based position-update request is a stretch of way to be travelled by the terminal, wherein a stretch of way-based position update of the terminal is to be triggered after travelling the stretch of way to be travelled,
> - for determining, for each possible path that corresponds to the stretch of way to be travelled within a given topology, a distance $d(s, p)$ between a position $s$ of the terminal and each of multiple points $p$ on the path,
> - for determining, for each of the possible paths, a maximum distance $dmax$ from the distances determined for the points $p$ on the path $d(s, p)$,
> - for determining the smallest of the maximum distances $dmax,$ and
> - for creating a distance-based position-update request corresponding to the smallest of the maximum distances $dmax,$ for the terminal.

2. Data processing module according to Claim 1, designed for receiving position-updates from a terminal according to a first communication protocol, and for transmitting position-updates to the server according to a second communication protocol, wherein the amount of data transmitted between the data processing module and the terminal for processing position-update requests of the server advantageously is smaller than that between the data processing module and the server.

3. Data processing module according to one of the preceding claims, designed for transmitting a position-update request to the terminal in response to one or more position-update requests of the server.

4. Data processing module according to Claim 3, wherein when multiple position-update requests of the server are present on the data processing module, the data processing module is designed for selecting one of the present position-update requests and for transmitting the selected position-update requests to the terminal and advantageously for determining which of the simultaneously present position-update requests of the server is the most restrictive, and for transmitting only the most restrictive query to the terminal.

5. Data processing module according to Claim 4, designed for receiving distance-based and/or zone-based position-update requests of the server, wherein distance-based position-update requests in each case represent a distance to be travelled by the terminal, in order to trigger a distance-based position-update of the terminal, and wherein zone-based position-based requests in each case represent which zone the terminal has to leave or to enter in order to trigger a zone-based position-update, and wherein the data processing module is designed to determine which of a plurality of simultaneously present distance- and zone-based position-update requests of the server corresponds to the shortest distance travelled by the terminal in order to trigger a distance- or zone-based position-update, and for transmitting a distance-based position-update request corresponding to the shortest distance for the terminal.

6. Data processing module according to Claim 4, designed for receiving distance-based and/or zone-based position-update requests of the server, wherein distance-based position-update requests in each case represent a distance to be travelled by the terminal, in order to trigger a distance-based position-update of the terminal, and wherein zone-based position-update requests in each case represent which zone the terminal has to leave or to enter in order to trigger a zone-based position-update, and wherein the data processing module is designed to determine which of a plurality of simultaneously present distance- and zone-based position-update requests of the server corresponds to a most restrictive zone to be left or to be entered by the terminal in order to trigger a distance- or zone-based position-update, and for transmitting a zone-based position-update request corresponding to the most restrictive zone for the terminal.

7. Data processing module according to Claim 4, designed for receiving periodic, distance-based, and/or zone-based position-update requests of the server, wherein periodic position-update requests in each case represent a predetermined time, after expiry of which the terminal creates a periodic position-update, wherein distance-based position-update requests in each case represent a distance to be travelled by the terminal in order to trigger a distance-based position-update of the terminal, and wherein zone-based position-update requests in each case represent which zone the terminal has to leave or to enter, to determine which of a plurality of simultaneously present distance- and zone-based position-update requests of the server corresponds to a shortest time until the creation of a periodic position-update by the terminal, and for creating a periodic position-update request corresponding to the shortest time for the terminal.

8. Data processing module according to one of the preceding claims, designed for creating a new position-update request for the terminal in response to

- receiving a position-update request from the server, which is more restrictive than position-update requests already present in the data processing module, or which has effects on the restrictivity of the position-update requests already present in the data processing module,
- deleting the most restrictive position-update requests present in the data processing module by the server, or
- obtaining a position-update from the terminal.

9. Data processing module according to one of the preceding claims, designed for receiving area queries, which are created by the server, in order to determine which terminals are in the area contained in the area queries and for transmitting distance-based, zone-based, or periodic position-update requests to the corresponding terminals in response to the receipt of area queries, wherein distance-based position-update requests in each case represent an update distance to be travelled by a terminal in order to trigger a distance-based update distance, and wherein zone-based position-update requests in each case represent which update zone a terminal has to leave or to enter in order to trigger a zone-based position-update, and wherein periodic position-update requests in each case represent a predetermined time

after expiry of which a terminal creates a periodic position-update, and wherein the data processing module is designed to determine dynamically the update distance, the update zone, or the periodicity of the distance-based respectively periodic position-update requests depending on the rates of the area queries, the mobility of the corresponding terminal, and/or the size of the corresponding areas.

10. Data processing module according to Claim 9, designed for determining the update distance, the update zone, or the periodicity of the distance-based, zone-based, or periodic position-update requests more restrictively as the rates of the corresponding area requests increase, and/or for determining the update distance or the update zone of the distance-based or zone-based position-update requests less restrictively, or for determining the periodicity of the periodic position-update requests as the mobility of the corresponding terminals increases.

11. Data processing module according to Claim 9, designed for determining the update distance, the update zone, or the periodicity of the distance-based, zone-based, or periodic position-update requests depending on the size and/or the position of the areas upon which the area requests are based.

12. Data processing module according to one of Claims 9 to 11, designed for determining the rates of area requests, the mobility of the corresponding terminal, and/or the size and/or the position of the corresponding areas, and for determining the update distance, the update zone, or the periodicity of the distance-based, zone-based, or periodic position-update requests based on the determined values.

13. Data processing module according to one of the preceding claims, designed for creating distance-based position-update requests for the terminal, wherein distance-based position-update requests in each case represent a distance travelled by the terminal in order to trigger a distance-based position-update of the terminal, and for receiving a stretch of way-based position-based request of the server, wherein the stretch of way-based position update represents a stretch of way to be travelled by the terminal, after which a stretch of way-based position-update of the terminal is to be triggered, and wherein the data processing module is designed by means of pre-stored topology information for each possible path of the said stretch of way within a given topology to determine the one that corresponds to the shortest distance and for creating a corresponding distance-based position-update request for the terminal.

14. Mobile terminal for communication with the data processing module according to one of the preceding claims, wherein the terminal is designed for deleting position-update requests of the data processing module in response to obtaining a new position-update request of the data processing module or the transmission of a position-update to the data processing module.

## Revendications

1. Module de traitement de données, disposé entre un serveur et au moins un terminal mobile dans un réseau de radiocommunication avec des services basés sur la localisation, dans lequel le module de traitement de données est conçu pour traiter des requêtes d'actualisation de position du serveur envoyées au terminal et pour y répondre, **caractérisé en ce que** le module de traitement de données est conçu pour

   - générer des requêtes d'actualisation de position basées sur la distance pour le terminal, lesdites requêtes d'actualisation de position basées sur la distance représentant chacune une distance existant entre une position actuelle et une position précédente du terminal, dans lequel une actualisation de position du terminal basée sur la distance devant être déclenchée une fois cette distance atteinte ;
   - recevoir une requête d'actualisation de position du serveur basée sur l'itinéraire, ladite requête d'actualisation de position basée sur l'itinéraire représentant un itinéraire à parcourir par le terminal, dans lequel une actualisation de position du serveur basée sur l'itinéraire devant être déclenchée après avoir parcouru l'itinéraire à parcourir,
   - déterminer, pour chaque chemin possible correspondant à l'itinéraire à parcourir au sein d'une topologie donnée, une distance $d(s, p)$ existant entre une position $s$ du terminal et chacun des points d'un certain nombre de points $p$ situés sur le chemin,
   - déterminer, pour chacun des chemins possibles, une distance maximale $dmax$ à partir des distances $d(s, p)$ déterminées pour les points $p$ situés sur le chemin,
   - déterminer la plus petite des distances maximales $dmax,$ et
   - générer une requête d'actualisation de position basée sur la distance, pour le terminal, correspondant à la plus petite des distances maximales $dmax.$

2. Module de traitement de données selon la revendication 1, conçu pour recevoir des actualisations de position émanant du terminal selon un premier protocole de communication, et pour transmettre des actualisations de position au serveur selon un deuxième protocole de communication, la quantité de données transmises pour traiter des requêtes d'actualisation de position du serveur entre le module de traitement de données et le terminal étant de préférence plus petite que la quantité de données transmises entre le module de traitement de données et le serveur.

3. Module de traitement de données selon l'une des revendications précédentes, conçu pour transmettre une requête d'actualisation de position au terminal en réponse à une ou plusieurs requêtes d'actualisation de position émanant du serveur.

4. Module de traitement de données selon la revendication 3, dans lequel, lorsque plusieurs requêtes d'actualisation de position du serveur sont présentes simultanément au niveau du module de traitement de données, le module de traitement de données est conçu pour sélectionner une des requêtes d'actualisation de position présentes et pour transmettre les requêtes d'actualisation de position sélectionnées au terminal et de préférence pour déterminer laquelle des requêtes d'actualisation de position du serveur présentes simultanément est la plus restrictive, et pour transmettre uniquement la demande la plus restrictive au terminal.

5. Module de traitement de données selon la revendication 4, conçu pour recevoir des requêtes d'actualisation de position du serveur basées sur la distance et/ou basées sur la zone, lesdites requêtes d'actualisation de position basées sur la distance représentant chacune une distance à parcourir par le terminal pour déclencher une actualisation de position du terminal basée sur la distance, et les requêtes d'actualisation de position basées sur la zone représentant chacune la zone que le terminal doit quitter ou dans laquelle il doit entrer pour déclencher une actualisation de position basée sur la zone, et le module de traitement de données étant conçu pour déterminer laquelle des requêtes d'une pluralité de requêtes d'actualisation de position du serveur basées sur la distance et sur la zone présentes simultanément correspond à la plus courte distance à parcourir par le terminal pour déclencher une actualisation de position basée sur la distance ou sur la zone, et étant conçu pour transmettre une requête d'actualisation de position basée sur la distance correspondant à la plus petite distance, pour le terminal.

6. Module de traitement de données selon la revendication 4, conçu pour recevoir des requêtes d'actualisation de position du serveur basées sur la distance et/ou basées sur la zone, lesdites requêtes d'actualisation de position basées sur la distance représentant chacune une distance à parcourir par le terminal pour déclencher une actualisation de position du terminal basée sur la distance, et lesdites requêtes d'actualisation de position basées sur la zone représentant chacune la zone que le terminal doit quitter ou dans laquelle il doit entrer pour déclencher une actualisation de position basée sur la zone, et le module de traitement de données étant conçu pour déterminer laquelle des requêtes d'une pluralité de requêtes d'actualisation de position du serveur basées sur la distance ou sur la zone présentes simultanément correspond à une zone la plus restrictive que le terminal doit quitter ou dans laquelle il doit entrer pour déclencher une actualisation de position basée sur la distance ou sur la zone, et étant conçu pour transmettre une requête d'actualisation de position basée sur la zone correspondant à la zone la plus restrictive, pour le terminal.

7. Module de traitement de données selon la revendication 4, conçu pour recevoir des requêtes d'actualisation de position du serveur périodiques, basées sur la distance et/ou basées sur la zone, lesdites requêtes d'actualisation de position périodiques représentant chacune une durée prédéterminée après l'écoulement de laquelle le terminal génère une actualisation de position périodique, lesdites requêtes d'actualisation de position basées sur la distance représentant chacune une distance à parcourir par le terminal pour déclencher une actualisation de position du terminal basée sur la distance, et lesdites requêtes d'actualisation de position basées sur la zone représentant chacune la zone que le terminal doit quitter ou dans laquelle il doit entrer pour déclencher une actualisation de position basée sur la zone, et le module de traitement de données étant conçu pour déterminer laquelle des requêtes d'une pluralité de requêtes d'actualisation de position du serveur basées sur la distance et sur la zone présentes simultanément correspond à la durée la plus courte jusqu'à la génération d'une actualisation de position périodique par le terminal, et étant conçu pour générer une requête d'actualisation de position périodique correspondant à la durée la plus courte, pour le terminal.

8. Module de traitement de données selon l'une des revendications précédentes, conçu pour générer une nouvelle requête d'actualisation de position pour le terminal en réponse à

- la réception d'une requête d'actualisation de position émanant du serveur, qui est plus restrictive que les requêtes d'actualisation de position déjà présentes dans le module de traitement de données, ou qui a des effets sur la restrictivité des requêtes d'actualisation de position déjà présentes dans le module de traitement de données,

- la suppression, par le serveur, des requêtes d'actualisation de position présentes dans le module de traitement de données qui sont les plus restrictives, ou

- l'obtention d'une actualisation de position émanant du terminal.

9. Module de traitement de données selon l'une des revendications précédentes, conçu pour recevoir des interrogations de plages qui sont générées par le serveur afin de déterminer quels terminaux se trouvent dans les plages contenues dans les interrogations de plages, et pour transmettre des requêtes d'actualisation de position basées sur la distance, basées sur la zone ou périodiques aux terminaux correspondants en réponse à la réception des interrogations de plages, lesdites requêtes d'actualisation de position basées sur la distance représentant chacune une distance d'actualisation à parcourir par le terminal pour déclencher une actualisation de position du terminal basée sur la distance, et lesdites requêtes d'actualisation de position basées sur la zone représentant chacune la zone que le terminal doit quitter ou dans laquelle il doit entrer pour déclencher une actualisation de position basée sur la zone, et lesdites requêtes d'actualisation de position périodiques représentant chacune une durée prédéterminée après l'écoulement de laquelle un terminal génère une actualisation de position périodique, et le module de traitement de données étant conçu pour déterminer de manière dynamique la distance d'actualisation, la zone d'actualisation ou la périodicité des requêtes d'actualisation de position basées sur la distance, basées sur la zone ou périodiques en fonction du taux des interrogations de plages, de la mobilité des terminaux correspondants et/ou de la taille des plages correspondantes.

10. Module de traitement de données selon la revendication 9, conçu pour déterminer de manière d'autant plus restrictive la distance d'actualisation, la zone d'actualisation ou la périodicité des requêtes d'actualisation basées sur la distance, basées sur la zone ou périodiques, que le taux des interrogations de plages correspondantes est élevé, et/ou pour déterminer de manière d'autant moins restrictive la distance d'actualisation ou la zone d'actualisation des requêtes d'actualisation de position basées sur la distance ou sur la zone ou pour déterminer de manière d'autant plus restrictive la périodicité des requêtes d'actualisation de position périodiques, que la mobilité des terminaux correspondants est élevée.

11. Module de traitement de données selon la revendication 9, conçu pour déterminer la distance d'actualisation, la zone d'actualisation ou la périodicité des requêtes d'actualisation de position basées sur la distance, basées sur la zone ou périodiques en fonction de la taille et/ou de la position des plages à la base des interrogations de plages.

12. Module de traitement de données selon l'une des revendications 9 à 11, conçu pour déterminer le taux d'interrogations de plages, la mobilité des terminaux correspondants et/ou la taille et/ou la position des plages correspondantes, et pour déterminer la distance d'actualisation, la zone d'actualisation ou la périodicité des requêtes d'actualisation de position basées sur la distance, basées sur la zone ou périodiques en se fondant sur les valeurs déterminées.

13. Module de traitement de données selon l'une des revendications précédentes, conçu pour générer des requêtes d'actualisation de position basées sur la distance pour le terminal, lesdites requêtes d'actualisation de position basées sur la distance représentant chacune une distance à parcourir par le terminal pour déclencher une actualisation de position du terminal basée sur la distance, et conçu pour recevoir une requête d'actualisation de position du serveur basée sur l'itinéraire, ladite requête d'actualisation de position basée sur l'itinéraire représentant un itinéraire à parcourir par le terminal, après quoi une actualisation de position du terminal basée sur l'itinéraire doit être déclenchée, et le module de traitement de données étant conçu pour déterminer, à l'aide d'informations de topologie préenregistrées, pour chaque chemin possible dudit itinéraire au sein d'une topologie donnée, celui qui correspond à la distance la plus courte, et pour générer une requête d'actualisation de position correspondante basée sur la distance, pour le terminal.

14. Terminal mobile destiné à communiquer avec le module de traitement de données selon l'une des revendications précédentes, dans lequel le terminal est conçu pour supprimer des requêtes d'actualisation de position du module de traitement de données en réponse à l'obtention d'une nouvelle requête d'actualisation de position du module de traitement de données ou à la transmission d'une actualisation de position au module de traitement de données.

# Fig. 1

# Fig. 2

**GPS/**
**Galileo**

**mobiles**
**Endgerät**

**Kompressions**
**Modul**

**Location**
**Server**

Positionierung

Positionierung

Positionierung

Positionierung

Komprimiertes
Position-
Update-
Protokoll

Klassische
Position-
Update-
Methoden(Abb.1)+
Bereichsanfragen

Update Zone (bei Verlassen)          ①

x Aktuelle Position

minimale Update-Distanz

Update Zone (bei Betreten)          ②

minimale
Update-Distanz
x

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030060214 A
- WO 2007025080 A
- US 2008119205 A
- WO 2004073233 A
- US 2006079244 A